# EUROPEAN PATENT APPLICATION

(11) **EP 1 143 700 A2**
(43) Date of publication of application: **10.10.2001**
(21) Application number: 01107257.6
(22) Date of filing: 23.03.2001
(51) Int. Cl.: H04N 1/387

(54) **Method, apparatus and recording medium for displaying templates**

(30) Priority: 29.03.2000 JP 2000090569
(71) Applicant: Fuji Photo Film Co., Ltd., Kanagawa-ken (JP)
(72) Inventor: Tsue, Takashi, c/o Fuji Photo Film Co., Ltd., Ashigarakami-gun, Kanagawa-ken (JP)
(74) Representative: Klunker . Schmitt-Nilson . Hirsch

(57) **Abstract**

At the time of generating a composite image from a user image and a template, how the user image looks in the template can be confirmed easily by displaying a catalog of templates having the user image therein. Auser image S1 and a plurality of templates T1∼T6 are read, and the user image S1 is inserted in an image insertion area of each of the templates. In this manner, a catalog R1 is generated. By displaying the catalog R1 on a monitor, how a combination of the user image S1 and each of the templates T1∼T6 looks can be confirmed easily, without confirming the combination one by one by inserting the image S1 in the respective templates T1∼T6.

## Description

### BACKGROUND OF THE INVENTION

### Field of the Invention

The present invention relates to a method and an apparatus for displaying templates to be laid out with a user image on a monitor or the like, and to a computer-readable recording medium storing a program to cause a computer to execute the method.

### Description of the Related Art

Digital photograph service systems for carrying out various kinds of digital photograph services, such as storing and recording images photographed by users in an image server and in a CD-R after digitization of the images, and receiving orders for additional prints, have been known. As one form of such a system, a network photograph service system for storing (registering) users' digital images in a system of a service provider and receiving printing orders or the like via a network such as the Internet has also been proposed.

In such a network photograph service system, in order to provide a digital photograph service to users, a server computer (hereinafter called an image server) having a scanner, a printer, and a large-capacity disc is installed in a wholesale laboratory, and photographs obtained by users are stored in the image server as image data. By enabling the users to access the image server via a network, various kinds of services such as receiving an order for an additional print, attaching a photograph to an e-mail message, and downloading of the image data can be provided. In such a service, a composite image such as a picture postcard comprising a user image and a template selected from various designs can be generated and provided to a user.

In this case, the laboratory stores the image data representing the user images, low resolution image data representing reduced user images, and template data. A user accesses the image server of the laboratory by using his/her personal computer having application software such as a Web browser. The user downloads a catalog of the user images and templates, and displays the catalog on the personal computer. When the user selects a desired one of the user images and templates respectively, low resolution image data and template data representing the selected user image and template are downloaded to the personal computer. The user carries out editing processing to insert the user image into an image insertion area of the template by using predetermined editing software, and transfers a result of the editing to the laboratory as editing instruction information. The laboratory generates a composite image by using the template and the user image, based on the editing instruction information transferred from the user. The composite image is transferred to the personal computer of the user, and a picture postcard or the like can be generated based on composite image data representing the composite image after confirmation of the composite image by the user.

However, the user cannot confirm how the user image looks with the selected template until the composite image is transferred, since sample images are inserted in respective image insertion areas of the templates in the catalog displayed on the personal computer, instead of the user image. Even if the template to be used is determined first and the user image is inserted in the image insertion area thereof, the combination cannot be confirmed either until the composite image is transferred. Therefore, if the user is not satisfied with the composite image, the user has to repeatedly carry out template or user image selection, downloading of the template or the user image, and editing instruction, while the laboratory has to repeatedly carry out editing processing and transfer of the composite image data to the user. As a result, the editing processing is not efficient.

### SUMMARY OF THE INVENTION

The present invention has been conceived based on consideration of the above problem. An object of the present invention is therefore to provide a template displaying method and a template displaying apparatus enabling efficient editing of a user image with a template, and to provide a computer-readable recording medium storing a program to cause a computer to execute the template displaying method.

A first template displaying method of the present invention comprises the steps of:
reading a user image and a plurality of templates each having an image insertion area for inserting the user image;
inserting the user image in the image insertion area of each of the templates and generating a catalog of the templates each having the user image therein; and
displaying the catalog.

The "catalog" herein referred to includes all the templates having the user image inserted therein displayed in one page or over a plurality of pages on a display screen.

In the first template displaying method of the present invention, it is preferable for the user image to be a user image having a resolution lower than a resolution of an original user image. It is also preferable for the templates to be templates having a resolution lower than a resolution of original templates.

The "original user image" and the "original templates" have a high resolution in the case where high resolution images and low resolution images of both the user image and the templates are generated in a network photograph service system, for example. In this case, the user image and the templates to be read are at the low resolution.

In the case where another user image different from the user image is read in the first template displaying method of the present invention, it is preferable for the catalog of the templates to be generated by inserting the newly read user image into the image insertion area of each of the templates instead of the user image.

A second template displaying method of the present invention comprises the steps of:
reading a plurality of user images and a template having an image insertion area for displaying the user images therein;
generating templates having the user images therein by inserting the respective user images in the image insertion area of the template while generating a catalog of the templates having the user images; and
displaying the catalog.

In the second template displaying method of the present invention, it is preferable for the user images to be user images having a resolution lower than a resolution of original user images. It is also preferable for the template to be a template having a resolution lower than a resolution of an original template.

In the case where another template different from the template is read in the second template displaying method of the present invention, it is preferable for the catalog to be generated by inserting the respective user images into an insertion area of the newly read template instead of the template.

A first template displaying apparatus of the present invention comprises:
reading means for reading a user image and a plurality of templates each having an image insertion area for inserting the user image therein;
catalog generating means for generating a catalog of the templates by inserting the user image in the image insertion area of each of the templates; and
display means for displaying the catalog.

In the first template displaying apparatus of the present invention, it is preferable for the user image read by the reading means to be a user image having a resolution lower than a resolution of an original user image. It is also preferable for the templates to be templates having a resolution lower than a resolution of original templates.

In the case where the reading means reads another user image different from the user image, it is preferable for the catalog generating means to generate the catalog of the templates by inserting the newly read user image in the image insertion area of each of the templates instead of the user image.

A second template displaying apparatus of the present invention comprises:
reading means for reading a plurality of user images and a template having an image insertion area for displaying the user images therein;
catalog generating means for generating templates having the user images therein by inserting the respective user images in the image insertion area of the template and for generating a catalog of the templates having the user images; and
display means for displaying the catalog.

In the second template displaying apparatus of the present invention, it is preferable for the user images read by the reading means to be user images having a resolution lower than a resolution of original user images. It is also preferable for the template to be a template having a resolution lower than a resolution of an original template.

In the case where the reading means of the second template displaying apparatus of the present invention reads another template different from the template, it is preferable for the catalog generating means to generate a catalog of templates by inserting the respective user images in an image insertion area of the newly read template instead of the template.

The first and the second template displaying methods of the present invention may be provided as programs recorded in a recording medium to cause a computer to execute the template displaying methods.

According to the first template displaying method and the first template displaying apparatus of the present invention, the catalog of the templates is generated and displayed by inserting the user image in the image insertion area of each of the templates. Therefore, by looking at the catalog, a user can confirm how the user image looks in the templates. As a result, repetitive template selection and editing processing of composite image generation until generation of a desired composite image become unnecessary, and editing efficiency can be improved.

According to the second template displaying method and the second template displaying apparatus of the present invention, the user images are inserted in the image insertion area of the template, and the templates having the user images therein are generated. The catalog of the templates having the user images is then generated and displayed. Therefore, by looking at the catalog, how the user images look in the template can be confirmed before composite images are actually generated from the user images and the template. As a result, repetitive user image selection and editing processing of composite image generation until generation of a desired composite image become unnecessary, and editing efficiency can be improved.

### BRIEF DESCRIPTION OF THE DRAWINGS

Figure 1 is a block diagram showing a configuration of a composite image generating apparatus as an embodiment of the present invention;
Figure 2 shows images displayed on a monitor;
Figure 3 is a flow chart showing operation of the embodiment; and
Figure 4 shows images displayed on the monitor.

### DESCRIPTION OF THE PREFERRED EMBODIMENT

Hereinafter, an embodiment of the present invention will be explained with reference to the accompanying drawings.

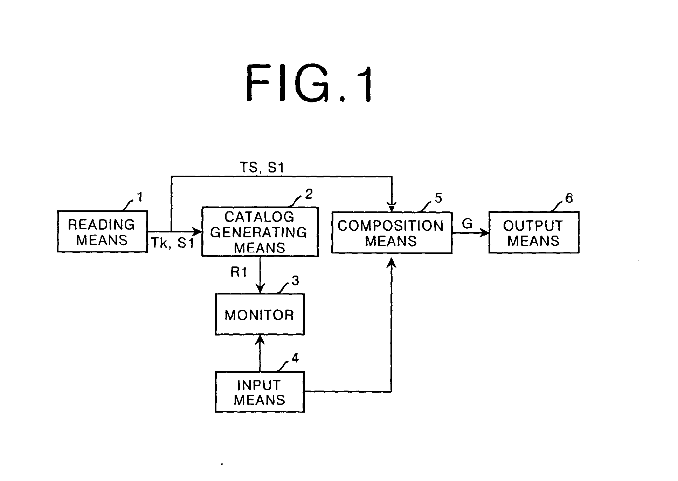

Figure 1 is a block diagram showing a configuration of a composite image generating apparatus adopting a template displaying apparatus as the embodiment of the present invention.

As shown in Figure 1, the composite image generating apparatus in this embodiment comprises reading means 1 for reading user image data S1 representing a user image (also called S1) and a plurality of data sets of templates Tk (k=1∼n) each having an image insertion area for inserting the user image, catalog generating means 2 for generating a catalog R1 of the templates Tk, a monitor 3 for displaying the catalog R1, input means 4 for selecting a desired template TS from the catalog R1 and for carrying out various kinds of inputs, composition means 5 for obtaining a composite image G by laying out the selected template TS and the user image S1, and output means 6 for outputting the composite image G.

The reading means 1 reads the user image S1 and the templates Tk from a recording medium such as a CD-R. Alternatively, the reading means 1 may read the user image data S1 and the templates Tk by receiving the data and the templates transferred from an image server via a network, in the case where the data and the templates are stored in the image server in a laboratory as in the case of a network photograph service system. If the user image data S1 and the templates Tk read by the reading means 1 are at a resolution lower than a resolution of original user image data and original templates, reading time necessary for the reading means 1 and time necessary for the catalog generating means 2 to generate the catalog R1 can be reduced.

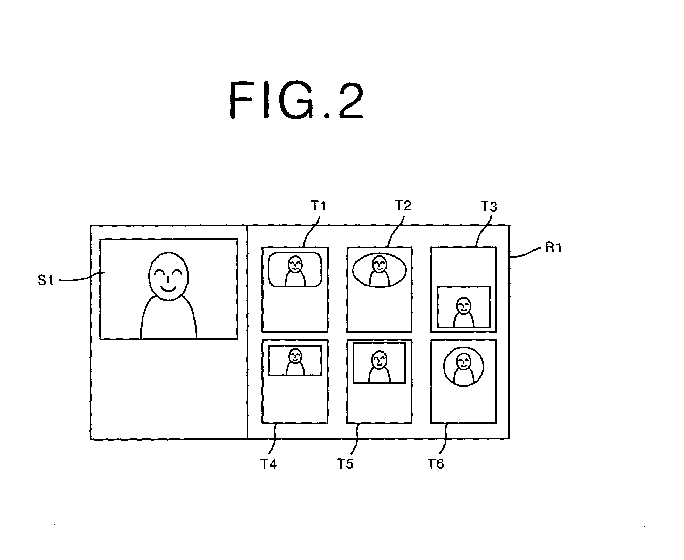

The catalog generating means 2 inserts the user image S1 in the respective image insertion areas of the n templates Tk and generates thumbnail images of the n templates Tk having the user image S1 therein. The catalog generating means 2 generates the catalog R1 of the templates Tk by laying out the thumbnail images, and displays the catalog on the monitor 3. Figure 2 shows the catalog R1 displayed on the monitor 3. In Figure 2, the catalog R1 is generated by inserting the user image S1 into six templates T1∼T6.

The composition means 5 generates the composite image G from the user image S1 and the template TS selected from the catalog R1 by the user using the input means 4. In the case where the catalog R1 is generated from the user image S1 and the templates Tk at the low resolution, the reading means 1 reads both the user image S1 and the selected template TS having a high resolution from a recording medium or via the network after selection of the template TS by the user. The reading means 1 inputs the user image S1 and the selected template TS at the high resolution to the composition means 5, and the composition means 5 generates the composite image G based on the user image data and the template.

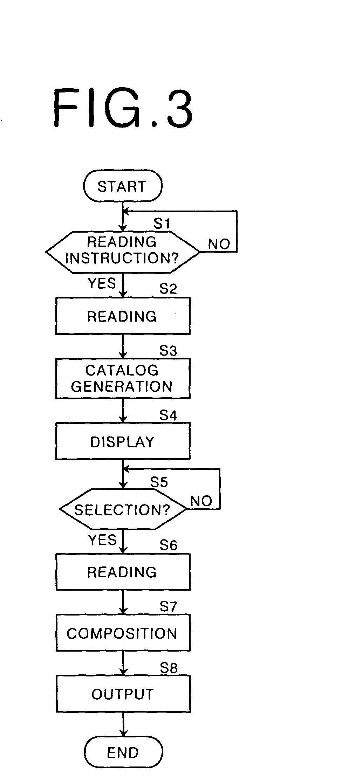

Operation of this embodiment will be explained next. Figure 3 is a flow chart showing the operation of this embodiment. The user 1 instructs image reading by using the input means 4 (Step S1). The reading means 1 reads the user image S1 and the templates Tk (Step S2). The image data S1 and the templates Tk having the low resolution are read in this embodiment. The user image data S1 and the templates Tk are input to the catalog generating means 2, and the user image S1 is inserted in the respective image insertion areas of the templates Tk. The thumbnail images are generated and the catalog R1 is generated by laying out the thumbnail images (Step S3). The catalog R1 is displayed on the monitor 3 (Step S4). The user selects the desired template TS from the catalog R1 displayed on the monitor 3 by using the input means 4 (Step S5), and the high resolution template TS corresponding to the selected template TS and the high resolution user image data S1 are read by the reading means 1 (Step S6). The composition means 5 generates the composite image G from the user image S1 and the template TS (Step S7). The output means outputs the composite image G as a print (Step S8) to end the procedure.

As has been described above, in this embodiment, the user image S1 is inserted in the respective insertion areas of the templates Tk read by the reading means 1, and the templates having the user image S1 therein are displayed as the catalog R1. Therefore, by looking at the catalog R1, how the user image S1 looks with the templates Tk can be confirmed. As a result, unlike a conventional system, repetitive selection of a template from a template catalog and editing processing to lay out the selected template with a user image until generation of a desired composite image become unnecessary. In this manner, editing processing can be carried out efficiently.

In the above embodiment, if the user wishes to change the user image S1, a new user image (called S2) is read by the reading means 1. After the user instructs a change of the user image S1 by using the input means 4, a catalog having the user image S2 replacing the user image S1 is generated and displayed on the monitor 3.

In the above embodiment, the catalog R1 is generated from the user image S1 and the templates Tk. However, in the case where a template to be used has been determined but a user image to be inserted in the template has not been determined, the template to be used (called T0) and user images S1 (1=1∼m) are read by the reading means 1. The catalog generating means 2 generates images comprising the respective user images S1 in the image insertion area of the template T0 for all the user images S1. By generating and laying out thumbnail images thereof, a catalog (called R2) is generated.

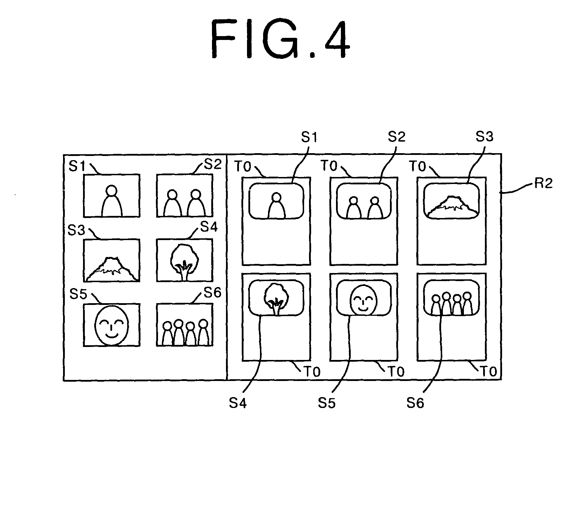

Figure 4 shows an example of the catalog R2 displayed on the monitor 3. In Figure 4, six user images S1∼S6 are inserted in the template T0 to comprise the catalog R2.

By displaying the images having the respective user images inserted in the image insertion area of the template T0 as the catalog R2, how the user images S1 look in the template T0 can be confirmed by simply looking at the catalog R2. Therefore, unlike a conventional system, repetitive user image selection and editing processing for a composite image using a template until generation of a desired composite image become unnecessary. In this manner, editing processing can be carried out efficiently.

In this case, if the user wishes to change the template T0, a new template (called T1) is read by the reading means 1. After the user instructs the change of the template by using the input means 4, the template T0 is replaced with the template T1 and displayed on the monitor 3.

## Claims

1. A template displaying method comprising the steps of:
reading a user image and a plurality of templates each having an image insertion area for inserting the user image therein;
inserting the user image in the image insertion area of each of the templates and generating a catalog of the templates each having the user image therein; and
displaying the catalog.

2. A template displaying method as defined in Claim 1, wherein the user image is a user image having a resolution lower than a resolution of an original user image.

3. A template displaying method as defined in Claim 1, wherein the templates are templates having a resolution lower than a resolution of original templates.

4. A template displaying method as defined in Claim 2, wherein the templates are templates having a resolution lower than a resolution of original templates.

5. A template displaying method as defined in any one of Claims 1 to 4, further comprising the steps of:
reading another user image different from the user image; and
generating the catalog of the templates by inserting the newly read user image into the image insertion area of each of the templates instead of the user image.

6. A template displaying method comprising the steps of:
reading a plurality of user images and a template having an image insertion area for displaying the user images therein;
generating templates having the user images therein by inserting the respective user images in the image insertion area of the template while generating a catalog of the templates having the user images; and
displaying the catalog.

7. A template displaying method as defined in Claim 6, wherein the user images are user images having a resolution lower than a resolution of original user images.

8. A template displaying method as defined in Claim 6, wherein the template is a template having a resolution lower than a resolution of an original template.

9. A template displaying method as defined in Claim 7, wherein the template is a template having a resolution lower than a resolution of an original template.

10. A template displaying method as defined in any one of Claims 6 to 9, further comprising the steps of:
reading another template different from the template; and
generating a catalog of templates by inserting the respective user images into an insertion area of the newly read template instead of the template.

11. A template displaying apparatus comprising:
reading means for reading a user image and a plurality of templates each having an image insertion area for inserting the user image therein;
catalog generating means for generating a catalog of the templates by inserting the user image in the image insertion area of each of the templates; and
display means for displaying the catalog.

12. A template displaying apparatus as defined in Claim 11, wherein,
in the case where the reading means reads another user image different from the user image, the catalog generating means generates the catalog of the templates by inserting the newly read user image in the image insertion area of each of the templates instead of the user image.

13. A template displaying apparatus comprising:
reading means for reading a plurality of user images and a template having an image insertion area for displaying the user images therein;
catalog generating means for generating templates having the user images therein by inserting the respective user images in the image insertion area of the template and for generating a catalog of the templates having the user images; and
display means for displaying the catalog.

14. A template displaying apparatus as defined in Claim 13, wherein,
in the case where the reading means reads another template different from the template, the catalog generating means generates a catalog of templates by inserting the respective user images in an image insertion area of the newly read template instead of the template.

15. A computer-readable recording medium storing a program to cause a computer to execute a template displaying method, the program comprising the procedures of:
reading a user image and a plurality of templates each having an image insertion area for inserting the user image therein;
inserting the user image in the image insertion area of each of the templates and generating a catalog of the templates each having the user image therein; and
displaying the catalog.

16. A computer-readable recording medium as defined in Claim 15, the program further comprising the procedures of :
reading another user image different from the user image; and
generating the catalog of the templates by inserting the newly read user image into the image insertion area of each of the templates instead of the user image.

17. A computer-readable recording medium storing a program to cause a computer to execute a template displaying method, the program comprising the procedures of:
reading a plurality of user images and a template having an image insertion area for displaying the user images therein;
generating templates having the user images therein by inserting the respective user images in the image insertion area of the template while generating a catalog of the templates having the user images; and
displaying the catalog.

18. A computer-readable recording medium as defined in Claim 17, the program further comprising the procedures of:
reading another template different from the template; and
generating a catalog of templates by inserting the respective user images into an insertion area of the newly read template instead of the template.
